# EUROPEAN PATENT APPLICATION

(11) **EP 3 059 691 A1**
(43) Date of publication of application: **24.08.2016**
(21) Application number: 15305254.3
(22) Date of filing: 19.02.2015
(51) Int. Cl.: G06F 21/34, G08C 17/00

(54) **Method and system to trigger actions based on motion monitoring**

(71) Applicant: Orange, 75015 Paris (FR)
(72) Inventor: Kizawa, Kazuki, Shinjuku-ku, Tokyo 160-0022 (JP); Nakano, Asako, Shinjuku-ku, Tokyo 160-0022 (JP); Zemek, Radim, Shinjuku-ku, Tokyo 160-0022 (JP)

(57) **Abstract**

The present invention relates to method for monitoring motions of a plurality of remote devices, each remote device comprising a motion sensor and being able to report to an electronic device motion data as read by its motion sensor, the method comprising for the electronic device the acts of selecting a first and second remote devices from the plurality for monitoring of their respective motions, selecting an action to be triggered, when detecting proximity of the first remote device with the second remote device, monitoring motion data as reported by both first and second remote devices; and when motion data reported by the first remote device matches motion data reported by the second remote device, imparting the action.

## Description

### FIELD OF THE PRESENT SYSTEM:

The present invention generally relates to electronic devices, and more specifically to monitoring of motions using such devices.

### BACKGROUND OF THE PRESENT SYSTEM:

Mobile handsets today may manage various short or long range connectivities with other devices. Recent so called smart phones may for instance connect with a remote server using WiFi or LTE. Alternatively, a smart phone may use short range connectivity such as NFC (Near Field Communication) or Blue Tooth™ to connect and exchange information with one or more other remote devices.

In existing smart phones, application programs (AP) may perform different functions using data exchanged with one or more such remote devices. Once paired with the smart phone, referred to here after also as a mobile device or more generally an electronic device, the remote device will for instance send data to the AP over the short range connectivity so that a function may be carried out based on the sent data. Health sensors are examples of such remote devices that send sensor data of a user to an health monitoring application on his mobile device. Motion sensors are another example often used in sports activity to monitor a user's motions, such as the number of steps or distance he may cover. Using such motion data, an application may measure parameters such as speed, calories burnt or other statistics related to the physical activity. Actions may be triggered such as sending the user a message about the next activity or food intake to plan.

Motion may also be monitored over a remote activity to unlock access to a device. Co-pending application EP 14197803 from the Applicant discloses a remote device, such as a knob, that may be used to unlock access to an electronic device such as a mobile device or a tablet. The knob is equipped with a motion sensor, and provided an unlock motion is performed once the knob is paired with the electronic device, the latter will compare the unlock motion data to a stored unlock motion and grant access if a match is found.

Similar solutions exist today using two remote devices. Document *"*Grouping Mechanisms for Smart Objects Based On Implicit Interaction and Context Proximity" from Stavros Antifakos and Bernt Schiele discloses a method for detecting that two remote devices are within the same location before an action may be triggered. A first remote device comprising a motion sensor, such as a bracelet, is placed on the user, for instance his hand. A second and similar remote device is placed on a door knob. As a user places his hand on the knob and tries to rotate it to open the door, both remote devices will report similar gestures to a distant server they are paired with. Provided the server detects the similarity, it will identify each remote device for instance using a device ID also reported with the motion data. A verification may be performed before access is granted. Presently, the server will check if the user associated to the first device is authorized to access the room behind the door identified through the second device, Provided he is, the door will unlock remotely, thereby granted access to the user.

Such a solution is based on an indirect location verification. As both remote devices are very closed to one another, they will report similar motion data or sequence. Furthermore, the remote devices will have to constantly report the motion to the distant server, which may drain their power fast.

There is still a need today for a solution that overcomes the drawback of the existing art. There is a further need for a solution that does not require the constant monitoring of the remote devices motions.

### SUMMARY OF THE PRESENT SYSTEM:

It is an object of the present system to overcome disadvantages and/or make improvements in the prior art.

The present system relates to a method for monitoring motions of a plurality of remote devices, each remote device comprising a motion sensor and being able to report to an electronic device motion data as read by its motion sensor, the method comprising for the electronic device the acts of:
- selecting at least a first and second remote devices from the plurality for monitoring of their respective motions,
- selecting an action to be triggered,
- when detecting proximity of the first remote device with the second remote device, monitoring motion data as reported by both first and second remote devices;
- when motion data are reported simultaneously by the remote devices, imparting the action.

Thanks to the present method, the start of the gesture monitoring is triggered only after the remote devices are determined to be in proxmimity with one another. Such a delay avoids false detections of what could be considered as similar motions for the two remote devices. A same gesture imparted on a first remote device may be interpreted differently whether executed close or remotely from another remote device. Thanks to the present method, the proximity check avoids misinterpretation of gestures by the electronic device.

The present system also relates to an electronic device according to claim 10, a system according to claim 11 and an application according to claim 12.

### BRIEF DESCRIPTION OF THE DRAWINGS:

The invention is explained in further detail, and by way of example, with reference to the accompanying drawings wherein:
FIG. 1A shows a user equipment or mobile device in accordance with an embodiment of the present system;
FIG. 1B show a remote device in accordance with another embodiment of the present system;
FIG. 2 shows an illustration of a first embodiment of the present system;
FIG. 3 shows an illustration of a second embodiment of the present system;
FIG. 4 shows an exemplary flowchart in accordance with another embody-ment of the present system, and;
FIG. 5 shows an exemplary user interface for selection of a remote device and an action to be triggered.

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well known devices, circuits, tools, techniques and methods are omitted so as not to obscure the description of the present system. It should be expressly understood that the drawings are included for illustrative purposes and do not represent the scope of the present system. In the accompanying drawings, like reference numbers in different drawings may designate similar elements.

For purposes of simplifying a description of the present system, the terms "operatively coupled", "coupled" and formatives thereof as utilized herein refer to a connection between devices and/or portions thereof that enables operation in accordance with the present system. For example, an operative coupling may include one or more of a wired connection and/or a wireless connection between two or more devices that enables a one and/or two-way communication path between the devices and/or portions thereof, either direct or indirect (through a server for instance). An operative coupling may also include a wired and/or wireless coupling to enable communication between an electronic device, such as a mobile device in accordance with an embodiment of the present system, and one or more remote user equipments or devices. An operative coupling may also relate to an interaction between program portions and thereby may not describe a physical connection so much as an interaction based coupling.

The term rendering and formatives thereof as utilized herein refer to providing content, such as digital media or a graphical user interface (GUI), such that it may be perceived by at least one user sense, such as a sense of sight and/or a sense of hearing. For example, the present system may render a user interface on a display device so that it may be seen and interacted with by a user.

The system, device(s), method, user interface, etc., described herein address problems in prior art systems. The system will be illustrated through different embodiment of a user equipment or electronic device such as a mobile device or handset (smartphone, tablets ...) and comprising a touch interface. The man skilled in the art may easily apply the present teachings to any electronic device presenting such a touch sensitive panel, (referred also hereafter as a touch sensitive display or screen), a pointing device (like a mouse) or a keyboard.

In accordance with an embodiment of the present system, an electronic device provides a GUI of an application program (AP) for monitoring a plurality of remote devices.

In the description here after, an application program (AP) - or software-may be seen as any tool that functions and is operated by means of a computer, with the purpose of performing one or more functions or tasks for a user or another application program. To interact with and control an AP, a GUI of the AP may be displayed on the user device display.

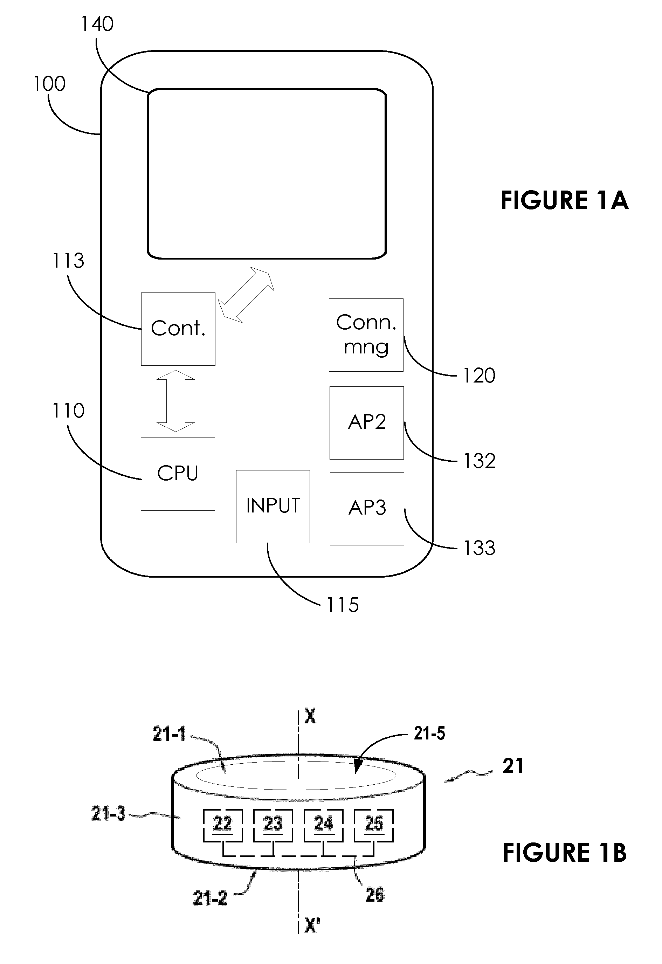

FIG. 1A is an illustration of an exemplary user equipment 100 used in the present system. In the here after description, the user or electronic device will be illustrated as a mobile device 100 with a touch interface. This illustration is in no way limiting as the present teaching would work for any user devices such as laptops, pads, desktops, mobile devices without a touch interface, and the likes, enabling the user to interact through a touch interface, a pointing device and/or a keyboard. The mobile device 100 comprises a display device 140, a processor 110, a controller 113 of the display device, and an input device 115.

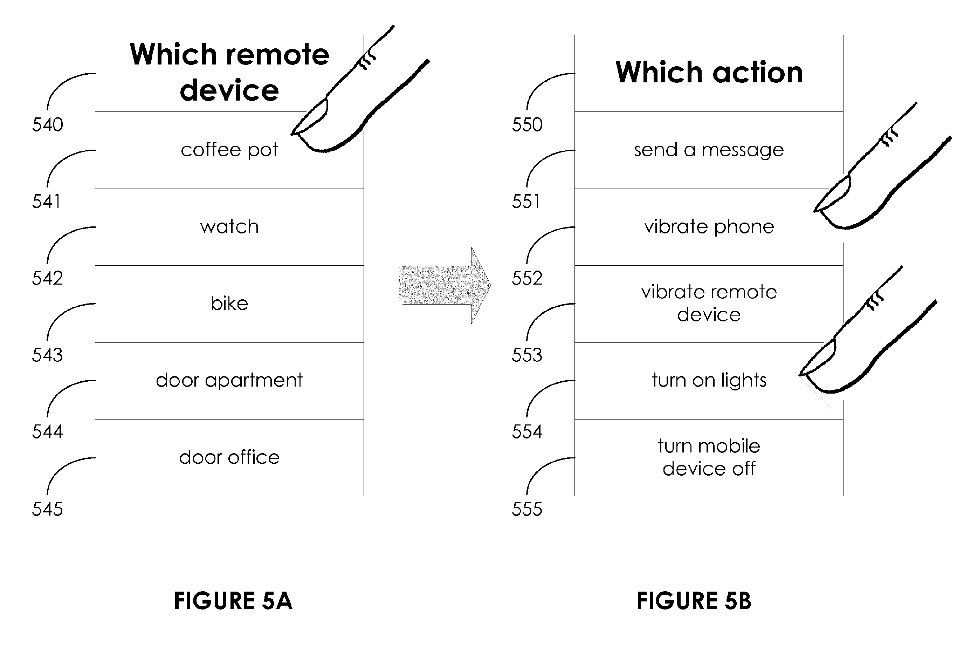

In the present system, the user interaction with and manipulation of the application program rendered on a GUI is achieved using the display device 140, or screen, which is presently a touch panel operationally coupled to the processor 110 controlling the displayed interface. Examples of such interfaces may be seen on FIGs. 5 for instance.

Processor 110 may control the rendering and/or the display of the GUI on the display device 140 depending on the type of application program, i.e. resident or web-based. Processor 110 may also handle the user entries according to the present method. The user entries to interact with an application program may be provided through interactions with the display device illustrated here as a touch panel 140.

The touch panel 140 can be seen as an input device allowing interactions with a finger of a user or other devices such as a stylus. Touch sensor interface or touch panel 140 may include any suitable circuitry to convert analog signals corresponding to touch input received over its surface into any suitable digital touch input data. Such touch input data can, for example, be used to make selections of portions of the GUI. The GUI may for instance represent a menu to either manage the plurality of remote devices or the preset motions as explained here after. The input received from a user's touch is sent to the processor 110. The touch panel 140 is configured to detect and report the (location of the) touches to the processor 110, which can interpret the touches in accordance with the application program and the currently displayed GUI. For example, the processor 110 can initiate a task, e.g. the pairing or removal of a remote device, subsequent to a given touch input.

The controller 113, e.g. a dedicated processor, may be provided to process input touches locally and reduce demand for the main processor 110 of the mobile device. The touch panel 140 can be based on sensing technologies including but not limited to capacitive sensing, resistive sensing, surface acoustic wave sensing, pressure sensing, optical sensing, and/or the likes. Here after, for simplification purpose, reference will be made to a finger of the user touching panel 140, other devices such as a stylus may be used in place of the user finger.

A connection manager 120 may be provided to manage, e.g. pair or unpair, the plurality of remote devices, for subsequent monitoring of their reported motions.

In the present system, a number of different applications may be provided with the mobile device 100, like AP2 132 and AP3 133. AP2 may be provided for instance to trigger actions such as sending messages based on motions as reported by a couple of paired remoted devices. AP2 will be described in further details here after.

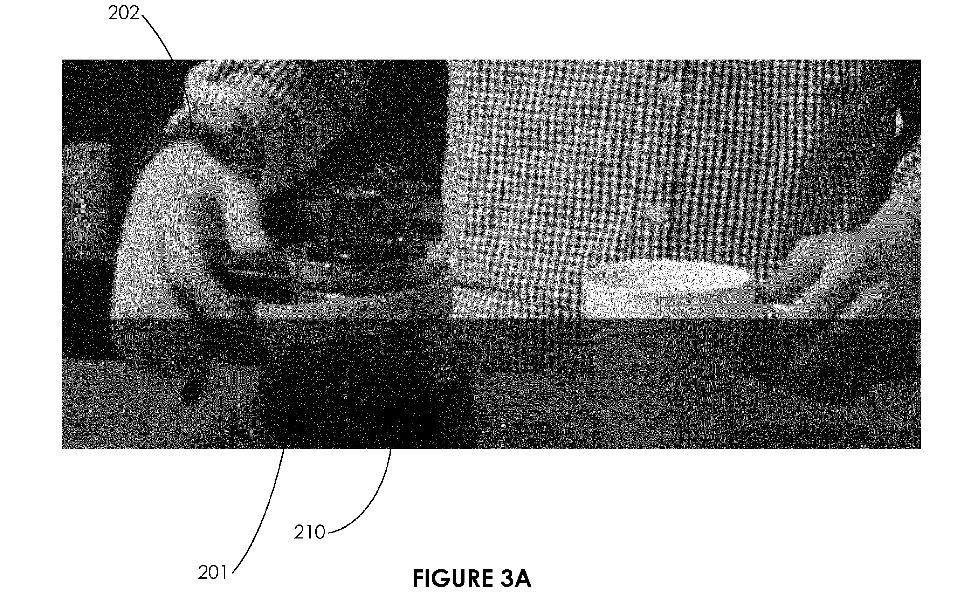

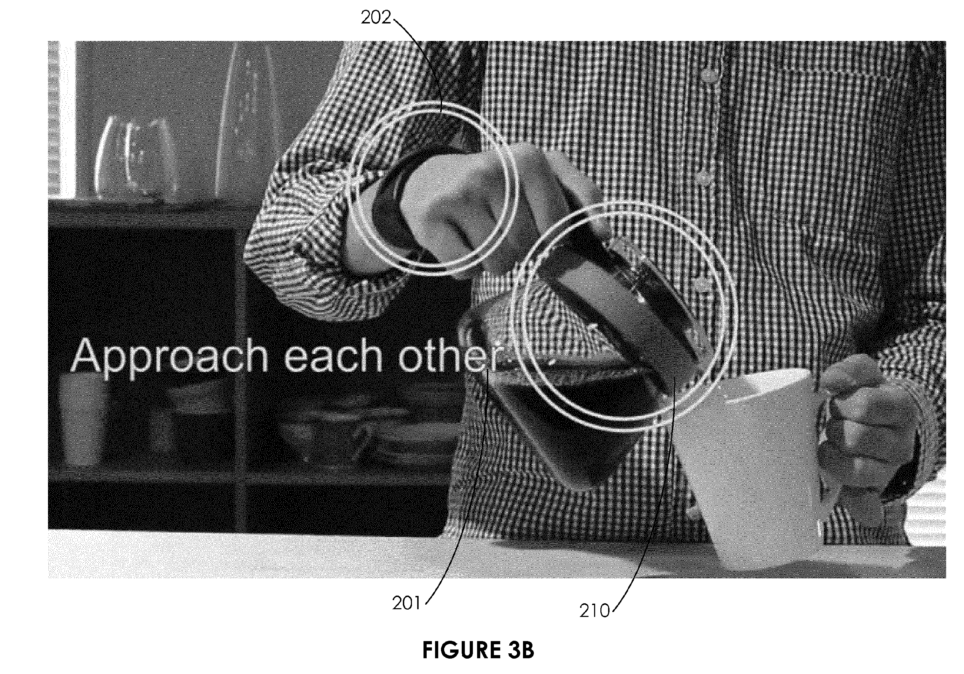

Referring now to Fig. 1B, an embodiment of a remote device is illustrated as ring or bracelet, i.e. a section of an emptied cylindar. The remote device 21 comprises a top planar surface 21-1, a bottom planar surface 21-2, an opening 21-5 and a circular peripheral surface 21-3. The remote device may be placed around the wrist of a user through the opening 21-5 or over a container like the coffee pot of FIG. 3. The remote device 21 further comprises, within the body of the device, a movement or motion (detection) sensor 22, a data processor 23, a connection unit 24 for establishing a communication with another device like the mobile device 100, and a memory 25 for storing instructions to operate the remote device 21. All elements 22 to 25 are coupled to an internal bus 26. These elements are represented schematically as placed within the thickness of the ring walls. The motion sensor 22 may sense the motion data at regular intervals. In an additional embodiment of the present system, the remote device may be configured to start sensing the motion sensor data only when it is in proximity with another remote device as seen later on. The processor 23 may also be configured to send motion data only when the motion sensor 22 starts detection an actual motion from the remote device, so as to save battery and processing.

In a specific embodiment, the connection unit 24 may be a conventional near field communication NFC means, such that the mobile device 100 operates as an active NFC reader and the remote device operates as a passive NFC responder. The connection unit 24 is thus an NFC antenna arranged within the thickness of the remote device. The remote device 21 is then a passive component and thus receives power from the mobile device 100 when within range e.g. to power its motion sensor 22 and transmits motion data and other data (like a device ID) by modulation of the transmitted signal, in a known manner.

Alternatively, the remote device may be an active component powered by its own battery (not shown in FIG. 1 B) so as to enable pairing with the mobile device 100 using e.g. Bluetooth™ such as Bluetooth™ Low Energy or BLE. The power may be generated through the device motions used to charge the battery.

More generally a remote device in the sense of the present system may be seen as a electronic device or component of various shape carrying a motion sensor and capable over a communication link (Bluetooth™, NFC ...) to report the motion sensor reading to the mobile device 100. In a further embodiment of the present system, the remote device 21 may be arranged to pair with another remote device in a master/slave relationship so that the reporting of some data may be passed on to the electronic device 100 through the master remote device as explained here after.

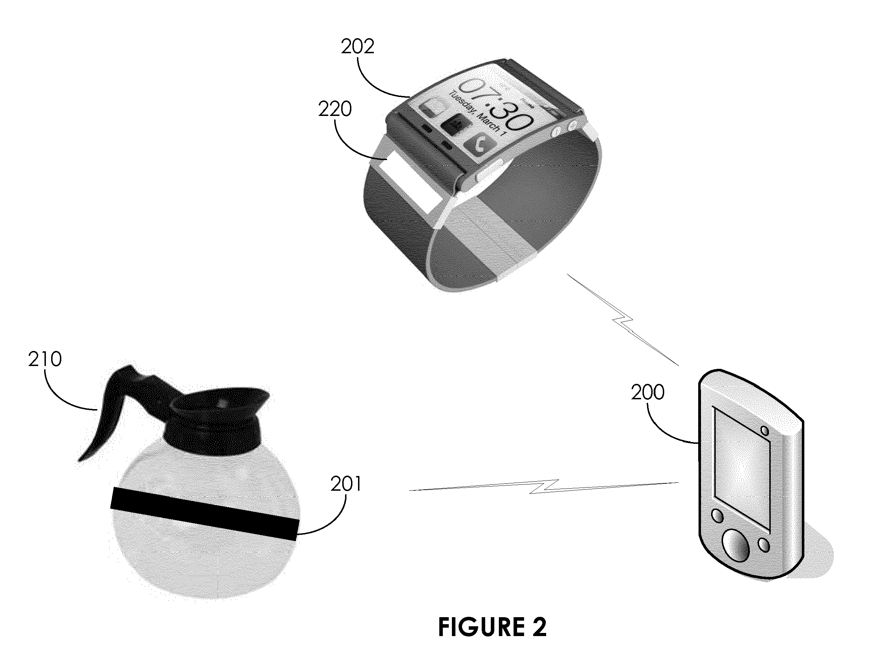

Fig. 2 shows an examplary embodiment of the present system. A mobile device 200 may monitor the motion of a plurality of remote devices, illustrated here through:
- a first remote device 201 in the form of a ring wrapped around a coffee pot 210. The first remote device 201 comprises a motion sensor and a connection unit to send, i.e. report motion data and other data to the mobile device 200;
- a second remote device 202 in the form of a connected watch, with a motion sensor 220. The second remote device is also arranged to pair with the mobile device 200 and report its motion sensor readings, as well as other data.

In the present system of FIG. 2, the mobile device 200 may comprise an application AP2 configured to:
- receive user selection of the first remote device 201 and optionally of the second remote device 202 from the plurality for monitoring of their respective motions. Alternatively, the second remote device may be selected from a default device that is systematically associated with any selection of a first device,
- receive a user selection of an action to be triggered, when the two remote devices report simultaneously matching motion data,
- optionally receive selection of predefined motion data that will be compared to the motion data as reported by both remote devices,
- measure proximity of the first remote device with the second remote device. This may be done indirectly by comparing the respective distance between each remote device and the mobile device. Alternatively, this may be done directly by the remote devices themselves, when communicating with one another. In that embodiment, one of them will push the measured distance along the motion data to the mobile device 200. By proximity, one may understand a physical proximity. Distance between the devices may use different techniques to be meaasured, using for instance signal strength (Bluetooth™, WiFi direct) or when the remote devices are close enough to the mobile device to enable an NFC data exchange,
- when the distance is considered short enough, e.g. when the distance is below a preset distance, monitor motion data as reported by both first and second remote devices. The mobile device acts as a hub the remote devices will connect to. The reporting may be a push or a pull from the mobile device 200. The remote device ID received along side the motion data may be used by the mobile device 200 to identify which remote device reported the motion data. Alternatively, a port number may be used to identify which remote device is reporting the data. One may note that a remote device may not start sending motion data until an actual motion is sensed by its motion sensor 22,
- when motion data is reported simultaneously by the first and the second remote devices, impart the action. The motion data may be compared for the same or at around the same time stamp. By the same timestamp, one may understand moments in the respective reporting of each remote device that are close enough to consider that the reported motions are taking place simultaneously.

FIG. 3A and 3B show an exemplary use case of the present system. In FIG. 3A, a coffee pot 210 is equipped with the first remote device 201, shown as a ring wrapped around the neck of the coffee pot, so as to be integral with the object when moved by a user. The user is wearing a second remote device 202 in the form of a bracelet or a connected watch.

In FIG. 3A, the user is about to grab the coffee pot. The proximity criterion is set so that two remote devices 201 and 202 are not considered yet to be in proximity to one another. The monitoring of the motion sensor data by the mobile device 200 has not started yet. In the subsequent stage of the use case as shown in FIG. 3B, the user has grabbed the coffee pot, triggering the proximity criterion so that the mobile device can start monitoring the motion sensor data from both remote devices. The user is imparting a first motion on the watch 202 with his hand gesture, causing the second remote device 202 to report a tilt motion. The coffee pot in his hand experiences a similar tilt gesture also reported by the first remote device 201. Simultaneity of the tilt motion data from both remote devices will trigger the action, e.g. showing a reminder notitication on the mobile device 200 (not shown in FIG. 3).

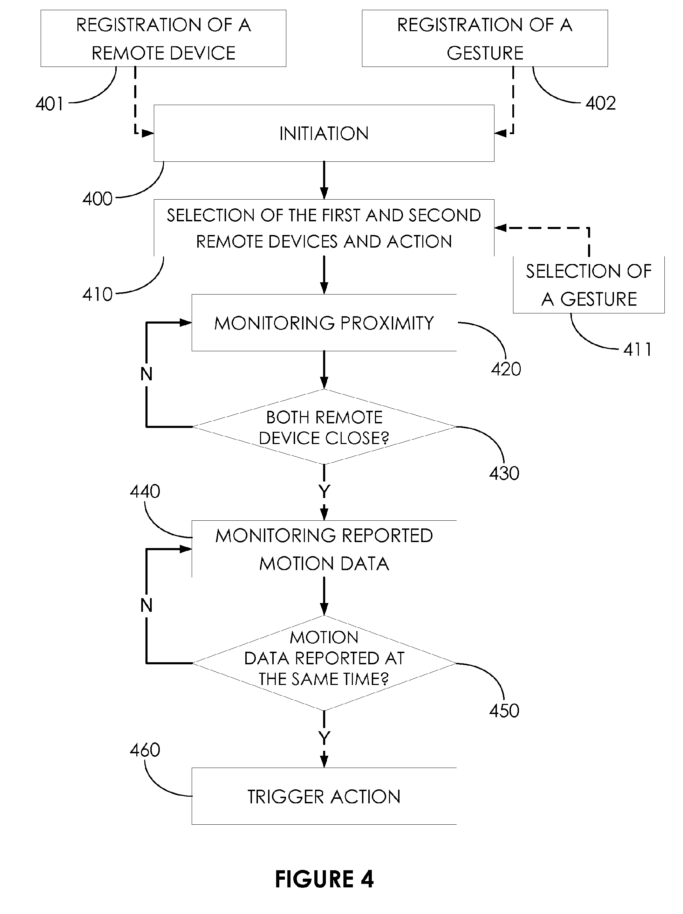

FIG. 4 is an illustrative embodiment of a method according to the present system. The present method may be carried out in the form of a computer program (e.g. as part of the operating system) or an application comprising instructions carried out by a processor of the electronic device 200. The present method may start at an initiation act 400 comprising for instance the download on the mobile device 200 of the application AP2. A configuration of the present method may comprise in the initiation act 400:
- the registration of the remote devices in act 401. An intial pairing with a remote device like the ring 201 or the watch 202 enables the application AP2 to collect characteristics of the remote device, such as a device ID, a port number for communicating with the remote device and optionally a device name and type. The device type may for instance condition what action to trigger. Alternatively, the user may be offered a list of preferred actions to be triggered so that the list may be presented upon selection of the remote device under registration. The actions may be crowdsourced from other users of the present system. The registration of a remote device will allow its subsequent selection for monitoring of its motion sensor,
- registration of a new gesture or motion for association with a remote device in act 402. A training may be needed to add a gesture or motion that may be recognized by the mobile device 200. Going back to the coffee pot illustration of FIGs. 3, once the remote device 201 is planed around the coffee pot 210 and registered, the user may want to train the application AP2 to recognize the pouring of the coffee, e.g. a tilting motion imparted by the user on the coffee pot 210. Once the remote devices are paired with the mobile device 200, registration of a new gesture may start with motion data be reported by the first remote device 201 for subsequent storing and later selection by the user. The registered motions may be used to monitor specific motions from the remote devices as explained here after. The registered gestures are function of a remote device as resulting from the training act 402. The registration of the motion data may be performed for both remote devices 201 and 202, and stored simultaneously in a gesture database of the mobile device under an entry for the tilt motion, i.e. with one predefined motion component registered per remote device. The entry may be retrieved throught one of the remote device ID. When the remote devices experience similar gestures, like with the tiling of the coffee pot or a door knob, the storing of two components may be optional but will nonetheless enhance the gesture recognition. The storing of two components may be advantageous when complex gestures, e.g. with very different motions from each remote device, are registered.

One may note that the registration of a gesture is optional as the triggering of the action may simply be imparted upon a similarity check of the gestures as reported by the selected remote devices. The gesture database may also be the result of crowdsourcing by grouping the registered gestures from various users of the present system.

In a further act 410, the user may select using a GUI of the application AP3 the first and second remote devices from the list of registered remote devices. The registered devices may be presented through a list of device IDs and device names so that the user may recognize easily the remote device he is interested in. This is illustrated in FIG. 5A showing selectable elements 541 to 545, each referreing to an object carrying a remote device registered with the mobile device. The selection of the second remote device may be made using the same list, or alternatively be dependant upon the choice of a first remote device. In other words, the second device may be a default remote device associated to the first device during its registration. This may be the case for instance when the second remote device is systematically the watch 202 around the user's wrist.

The user may also select in the same act 410 the action to be triggered. The action may be independent from the first and/or second device selection. Its selection may be operated through a GUI presented the different actions available to the user. The list may also be customized during the configuration act 400.

Alternatively, the selection of the first device may cause the application AP2 to present a list of predefined actions, either depending upon the first remote device, or based on a user selection as made in the configation of act 400. The list of actions may be seen in that case as a short list of actions most commonly used by the user when selecting the first remote device. Such a list is illustrated in FIG. 5B, displayed on the mobile device interface once the first remote device 201, shown here through a selectable element 541, has been selected.

Alternatively, the action may be selected first, and related remote devices proposed in a list to the user.

In an option act 411, a predefined gesture or motion may also be seleted by the user from the list of predefined motions in the gesture database (as defined in optional act 402). The predefined motion may be used in the present system to monitor for motion data as reported by the remote devices that match the predefined gesture. Using the example of FIGs. 3, the predefined gesture may be the tilt gesture as trained in act 401. As explained before, the predefined gesture may have at least two components, one for each remote device selected in act 410. The selection of a predefined motion or gesture may also be available through an interface as the ones presented in FIGs. 5.

In a further act 420, the mobile device will start monitoring how proximate the two remote devices are from one another. This corresponds to the illustration of FIG. 3A. In order to start the monitoring and recognition of motion data, the present system allows to identify the beginning of a gesture or motion once proximity between the remote devices is ensured. Such an approach avoids false detection of motions. Specific gestures or motions can be used through the training as a gesture may have a different signification based on proximity.

As mentioned before, various techniques may be used to estimate how physically close the remote devices 201 and 202 are from one another. When a short range communication technology is used (WiFi direct, NFC, Bluetooth™ ...) the monitoring of the proximity may only start when the remote devices come within range of the mobile device for the chosen technology so as to enable pairing with the mobile device 200. Bluetooth™ technology is interesting in that it allows the mobile device to know when a remote device is connected, and gives access to the distance to the device using the signal strength.

The proximity may be considered as established when the distance (either measured from a remote device to the mobile device, or between the two remote devices) is shorter than a minimal distance under which the monitoring of motiondata (act 440) may be performed. In that embodiment, the signal strength of the communication link (e.g. Bluetooth™) between two devices may be used as an indication of their distance from one another. Alternatively, the pairing with the mobile device may be seen as triggering the proximity criterion between the remote devices. A pairing of the two remote devices with one another, when enabled, may also trigger the proximity criterion. With the example of an NFC communication technology, the proximity will be the direct consequence of a remote device within communication range of the mobile device.

When the first remote device 201 is detected as in proximity with the second remote device 202 (answer Yes to act 430), the mobile device 200 will start monitoring in a further act 440 the motion data as reported by each remote device using its motion sensor 22 and its connection unit 23. The reporting may be enabled through the communication channel or link established between a remote device and the mobile device, once paired.

As long as the proximity is not established (answer No to act 430), the monitoring of the proximity will resume in a further act 420.

Using the reported motion data from act 440, the mobile device will compare the motion data reported by each remote device, and provided motion data are reported simultaneously (answer Yes to act 450), the selected action from act 410 may be imparted or triggered. By simultaneous reporting, one may understand that:
- motion data is reported around a same time stamp or period of time as seen by the mobile device 200,
- actual motion data is reported, i.e. either data different than noise data from the sensors when the sensors are always on, or alternatively, sensor data sent by a remote device when its sensor starts sensing a motion. As mentioned before, it may be interesting to delay transmission of data as long as the readings from the motion sensor do not exceed a threshold so as to save the battery of the remote device.

Thanks to the present system, imparting the action is delayed as long as the remote devices are not close enough. Indeed the remote devices may report motion data simultaneously while they are not in proximity from each other. This may be the case if the user is moving with his watch 202 around his wrist, while somebody else is moving the coffee pot. Triggering the action will correspond to a false detection. A user B without a remote device around his wrist may try to turn the knob of a door while another user A with the watch 202 is not in proximity. Provided the user A with the watch is active, both remote devices will send motion data, which may cause a verification of the user's rights to access. The false detection would allow the door to unlock and give user B access.

In an additional embodiment of the present system, the action may be imparted only after the motion data reported by the remote devices are linked based on a similarity criterion. Different techniques may be used to compare the reported motion data from both remote devices 201 and 202:
- the match may be triggered through the comparison of motion data as reported by each remote data. Using the timestamp of the reporting, the mobile device will use a similarity criterion to check whether the motion data are related to one another,
- alternatively, when a predefined gesture is selected (act 411), the matching of the reported motions comprises comparing the motions reported by the first and second remote devices to the selected predefined motion. When a gesture or motion component is available for each remote device in the gesture database as explained before, the comparion will be made for each remote device. A similarity criterion may also be used at this stage,
- in an additional embodiment, the selected predefined gesture may result from a complex motion requiring very distinct motions from either remote device. In this case, the two component approach is a possible approach.

Different handling of the reported motions may be used to determine whether they are a match. Descriptions of such techniques are beyond the scope of the present system and may be readily used by the man skilled in the art.

In an additional embodiment of the present system, a third looper may be selected. It may be user selected, using for instance the same user interface as in FIG. 5A, or a default looper linked to either the first or second looper, or both. The proximity criterion is then applied to the 3 loopers. In other words, when detecting proximity of the first, second and third remote devices with one another, the mobile device will start monitor motion data as reported by the three remote devices

It is the simultaneous reporting of motion data from the 3 loopers that will trigger the action. In other words, when motion data are reported simultaneously by both three remote device, the mobile device will impart the action.

When a predefined gesture is used, a third component for the third looper may be available for comparison purposes.

When no match is found (answer No to act 440), the present method will resume with the monitoring of act 440.

Other sensors may be used to enhance the proximity detection, like a combination of Bluetooth™ and NFC, or even location based technologies.

Finally, the above discussion is intended to be merely illustrative of the present system and should not be construed as limiting the appended claims to any particular embodiment or group of embodiments. Thus, while the present system has been described with reference to exemplary embodiments, including user interfaces, it should also be appreciated that numerous modifications and alternative embodiments may be devised by those having ordinary skill in the art without departing from the broader and intended spirit and scope of the present system as set forth in the claims that follow.

The section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements ;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated; and
i) the term "plurality of" an element includes two or more of the claimed element, and does not imply any particular range of number of elements; that is, a plurality of elements may be as few as two elements, and may include an immeasurable number of elements.

## Claims

1. A method for monitoring motions of a plurality of remote devices, each remote device comprising a motion sensor and being able to report to an electronic device motion data as read by its motion sensor, the method comprising for the electronic device the acts of:
- selecting at least a first and second remote devices from the plurality for monitoring of their respective motions,
- selecting an action to be triggered,
- when detecting proximity of the first remote device with the second remote device, monitoring motion data as reported by both first and second remote devices;
- when motion data are reported simultaneously by both remote devices, imparting the action.

2. A method according to claim 1, further comprising imparting the action when verifying that the motion data reported by each remote device are linked based on a similarity criterion.

3. A method according to claim 1, wherein the selecting of a remote device further comprises:
- selecting a predefined motion,
the imparting of the action being carried out when both motion data reported by the first and second remote devices match the predefined motion.

4. The method according to claim 2, wherein the selected predefined motion comprises a motion component for each remote device, the matching of the reported motion comprising:
- verifying that the motion reported by a remote device matches the predefined motion component corresponding to said remote device.

5. The method according to one of the previous claims, wherein the predefined motion is selected from a list that is function at least of one of the selected remote devices.

6. The method according to one of the previous claims, where the proximity is reported by the first or the second remote device.

7. The method according to one of the previous claims 1 to 3, wherein the proximity is calculated based on the distance of each remote device with the electronic device.

8. The method according to the previous claim, wherein the distance is based on the signal strength of a communication channel established between a remote device and the electronic device.

9. The method according to one of the previous claims, wherein selecting a second remote device comprises selecting a default remote device associated to the first remote device.

10. The method according to one of the previous claims, wherein the action to be triggered is selected from a list that is function at least of one of the selected remote devices.

11. The method according to one of the previous claim 1, further comprising:
- selecting a third remote device,
the acts of detecting proximity and simultaneous reporting of motion data taking into account the selected third remote device.

12. The method according to the previous claim, further comprising:
- selecting a predefined motion,
- imparting of the action when motion data reported by the first, second and third remote devices match the predefined motion.

13. The method according to claim 12, wherein the selected predefined motion comprises a motion component for each remote device, the matching of the reported motion comprising:
- verifying that the motion reported by a remote device matches the predefined motion component corresponding to said remote device.

14. A electronic device for monitoring motions of a plurality of remote devices, each remote device comprising a motion sensor and being able to report to the electronic device motion data as read by its motion sensor, the electronic device comprising a processor operable to:
- select a first and second remote devices from the plurality for monitoring of their respective motions,
- select an action to be triggered,
- when detecting proximity of the first remote device with the second remote device, monitor motion data as reported by both first and second remote devices;
- when motion data are reported simultaneously by both remote devices, impart the action.

15. A system comprising:
- a plurality of remote devices, each remote device comprising a motion sensor and arranged to report over a communication link motion data read by the motion sensor,
- an electronic device for monitoring motions of the plurality of remote devices, the electronic device comprising a processor operable to:
- select a first and second remote devices from the plurality for monitoring of their respective motions,
- select an action to be triggered,
- when detecting proximity of the first remote device with the second remote device, monitor motion data as reported by both first and second remote devices;
- when motion data are reported simultaneously by both remote devices, impart the action.

16. An application embodied on a computer readable medium and arranged to monitor a plurality of remotes devices, the application being carried out by a processor of and electronic device and comprising instructions to implement a method according to one of the claims 1 to 9.
